Europäisches Patentamt

European Patent Office

Office européen des brevets

(11) Publication number: 0 369 331
A2

## EUROPEAN PATENT APPLICATION

(21) Application number: 89120821.7

(22) Date of filing: 09.11.89

(51) Int. Cl.⁵: G01P 3/36

(30) Priority: 10.11.88 JP 284197/88

(43) Date of publication of application:
23.05.90 Bulletin 90/21

(84) Designated Contracting States:
DE FR GB NL

(71) Applicant: CANON KABUSHIKI KAISHA
30-2, 3-chome, Shimomaruko, Ohta-ku
Tokyo(JP)

(72) Inventor: Nishimura, Tetsuharu
1540-5-404, Nakanoshima Tama-ku
Kawasaki-shi Kanagawa-ken(JP)
Inventor: Kiyomatsu, Satoshi
Canon Ichigaoryo, 1171-9 Ichigao Midori-ku
Yokohama-shi Kanagawa-ken(JP)
Inventor: Hirata, Noritsugu
Foresutohiruzu Miho 2-101 930-24, Miho-cho
Midori-ku Yokohama-shi Kanagawa-ken(JP)
Inventor: Yamada, Yasuhiro
3168-2, Nakata-cho Izumi-ku
Yokohama-shi Kanagawa-ken(JP)
Inventor: Kishino, Hitoshi
1306-203, Sanno-cho 2-chome Kamimaruko
Nakahara-ku
Kawasaki-shi Kanagawa-ken(JP)

(74) Representative: Grupe, Peter, Dipl.-Ing. et al
Patentanwaltsbüro
Tiedtke-Bühling-Kinne-Grupe-Pellmann-Gra-
ms-Struif-Winter-Roth Bavariaring 4
D-8000 München 2(DE)

(54) Speed detector for a vibration wave driven motor.

(57) There is provided a vibration wave driven motor comprising: a number of diffraction gratings provided for either a rotating member or a vibrating member along a rotating direction; and an optical system for irradiating a light flux from a coherent light source to the diffraction gratings through a plurality of optical paths, for interfering a plurality of diffracted lights generated, and for allowing the resultant interference light to be detected by photo sensitive devices, wherein by detecting the outputs of the photo sensitive devices, the high accurate speed control is accomplished.

FIG. IA

## Speed Detector for a Vibration Wave Driven Motor

### BACKGROUND OF THE INVENTION

#### Field of the Invention

The present invention relates to a rotational speed detector to detect a relative rotation between a vibrating member and a member which is in contact with the vibrating member in a vibration wave driven motor for relatively moving the vibrating member and the member by travelling vibration waves generated in the vibrating member.

#### Related Background Art

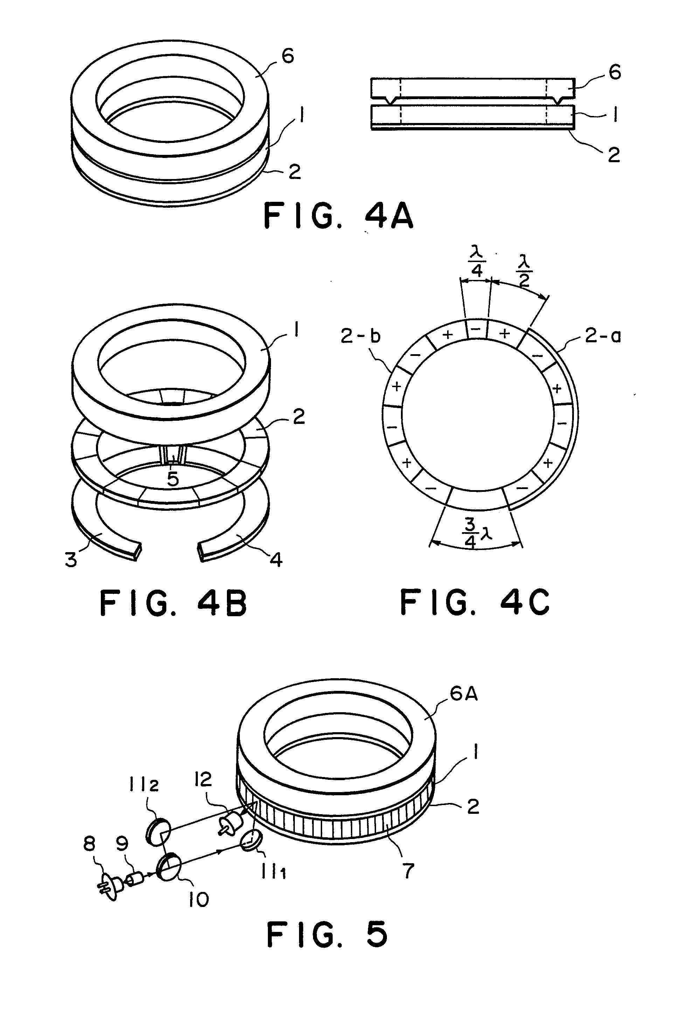

Figs. 4A and 4B show schematic diagrams of a conventional example of a vibration wave rotation type motor which is driven by the travelling vibration waves. In the diagrams, reference numeral 1 denotes a vibrating member made of an elastic material such as a brass or the like. Reference numeral 2 indicates a piezoelectric or electrostrictive element (for instance, PZT (zircon lead titanate)) serving as an electric/mechanical energy converting element jointed with the vibration member 1. For instance, as shown in Fig. 4C, the electrostrictive element 2 is constructed by individual piezoelectric or electrostrictive elements which were polarized and arranged circularly or like a ring. The piezoelectric or electrostrictive elements are divided into two groups. For the elements 2-a of one group, the elements 2-b of another group are arranged at a pitch which is a shifted by only 1/4 of a wavelength $\lambda$ of the vibration wave to be applied. The elements in each group are arranged in a manner such that the elements which are neighboring at a pitch of 1/2 of the wavelength $\lambda$ are set to be opposite polarities. In the diagram, signs " + " and "-" denote signs of the polarization characteristics. In the element shown by " + ", the electrode side is negative and the elastic material side is positive. In the element shown by "-", the electrode side is positive and the elastic material side is negative. Reference numerals 3 and 4 indicate electrode films corresponding to each group. A voltage can be applied to the piezoelectric or electrostrictive elements 2 through the electrode films 3 and 4. Reference numeral 5 denotes an electrode to detect a resonance state and 6 represents a rotor which is come into pressure contact with the stators 1 to 5.

In the vibration wave rotation type motor with the above construction, when an AC voltage of $V_0 \sin \omega t$ is applied to the electrode 3 of the elements of one group and an AC voltage of $V_0 \cos \omega t$ is applied to the electrode 4 of the elements of another group, the phases of the adjacent elements in each group are shifted by 90° and the expanding/contracting motions occur. Those elements are joined with the elastic material 1. The expansion and contraction of the elements are converted into the flexural vibration of the whole stators and a travelling bending wave occurs on the ring surface. Thus, the rotor 6 which is in frictional contact with the stators causes a rotational motion.

On the other hand, in the conventional vibration wave driven motor, as means for controlling a rotational speed or a rotational angle of the rotor 6, there has been used a system in which a gear is provided for the rotor and another gear to which a rotary encoder is coupled is come into engagement with the gear and an output of the rotary encoder is used.

However, since such a speed detector uses the system in which the rotational speed is detected through the gears, there is a drawback such that the rotational speed and angle cannot be controlled at a high accuracy due to manufacturing errors of the teeth of the gears, engagement errors of a plurality of gears, back lashes thereof, and the like.

### SUMMARY OF THE INVENTION

It is an object of the invention to provide a speed detector which can detect the rotational speed of the vibration wave driven motor at a high accuracy.

Another object of the invention is to provide a rotational speed detector for a small vibration wave driven motor.

### BRIEF DESCRIPTION OF THE DRAWINGS

Fig. 1 shows the first embodiment of a rotational speed detector of a vibration wave driven motor according to the invention;

Fig. 1A is a perspective view;

Fig. 1B is a cross sectional view for explaining the detection principle;

Fig. 1C is a drive circuit diagram;

Fig. 2 is a perspective view showing the second embodiment;

Fig. 3 is a cross sectional view showing the third embodiment;

Fig. 4 shows a vibration wave driven motor;

Fig. 4A is a perspective view;

Fig. 4B is an exploded perspective view;

Fig. 4C is a plan view showing a polarizing state; and

Fig. 5 is a perspective view showing the fourth embodiment.

## DETAILED DESCRIPTION OF THE PREFERRED EMBODIMENTS

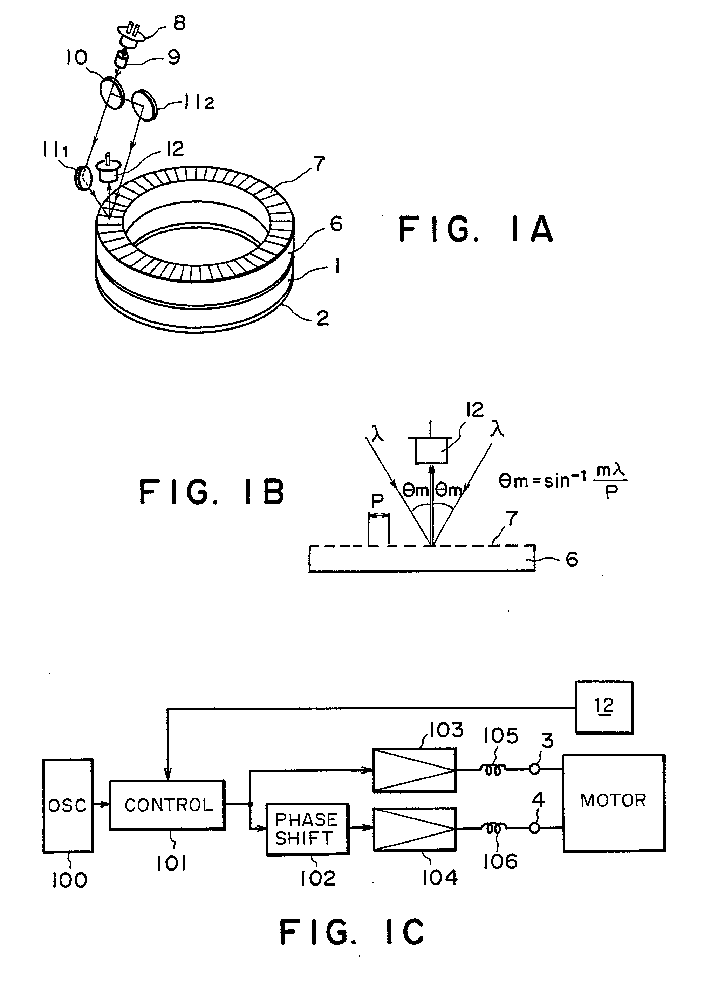

Fig. 1 shows an embodiment of the present invention. .

In Figs. 1A and 1B, reference numeral 7 denotes a diffraction grating arranged on the upper surface of the rotor 6; 8 indicates a coherent light source such as a laser or the like; 9 a collimating lens; 10 a beam splitter; $11_1$ and $11_2$ reflecting mirrors; and 12 a photo sensitive device. The light flux emitted from the coherent light source 8 is converted into the almost parallel light flux by the collimating lens 9 and enters the beam splitter 10. The reflected light and the transmitted light which were separated by the beam splitter 10 are reflected by the reflecting mirrors $11_1$ and $11_2$ and irradiate the diffraction grating 7 by two light fluxes. At this time, as shown in Fig. 1B, the incident surfaces of the two light fluxes are set in the plane which is parallel to the arrangement direction of the diffraction grating 7 and an incident angle $\theta_m$ is expressed as follows.

$\theta_m = \sin^{-1}(m\lambda/p)$

where, m is an integer, $\lambda$ indicates the wavelength of the coherent light source 8, and p represents a lattice pitch of the diffraction grating 7. The reflected diffracted lights of $\pm m$ order are emitted almost perpendicularly from the diffraction grating 7 and become the interference light and enter the photo sensitive device 12. When the diffraction grating 7 is deviated by only one lattice pitch p, the phases of the diffracted lights of $\pm m$ order are changed by only $2m\pi$. Therefore, the interference light of the diffracted lights of $\pm m$ order which enter the photo sensitive device 12 is subjected to the light/dark changes of 2m times in association with the deviation of one lattice pitch p of the diffraction grating 7. Now, assuming that the total number of gratings of the diffraction grating 7 is set to 21600 and a diameter of the rotcr is set to 50 mm, one lattice pitch p is set to $\pi$ x 50/21600 = 7.3 m and one angle pitch 4p is set to 360 x 60/21600 = 1 minute. On the other hand, assuming that the $\pm$ one-order diffracted lights are selected as the diffracted lights, a sine wave of one period is derived from the photosensitive device 12 every rotational angle of 30 seconds of the rotor 6. Further, when the rotor 6 rotates once, 43200 sine waves whose number is twice as large as the total number of gratings are obtained from the photo sensitive device 12. A signal generated from the photo sensitive device 12 is input to a control circuit 101 shown in Fig. 1C. The control circuit 101 controls a voltage level of an AC signal of an oscillator 100 in accordance with the frequency of the signal which is output from the photo sensitive device 12. Assuming that the rotational speed of the rotor 6 is higher than a set speed, the control circuit 101 operates so as to reduce the output voltage to thereby reduce the actual rotational speed. In the opposite case, the control circuit 101 operates so as to increase the output voltage. An adjusted output signal which is generated from the control circuit 101 is supplied to the electrode 3 through an amplifier 103 and a coil 105 and is supplied to the electrode 4 through a phase shifter 102, an amplifier 104, and a coil 106. Therefore, the rotational speed and angle of the motor are controlled at high accuracy.

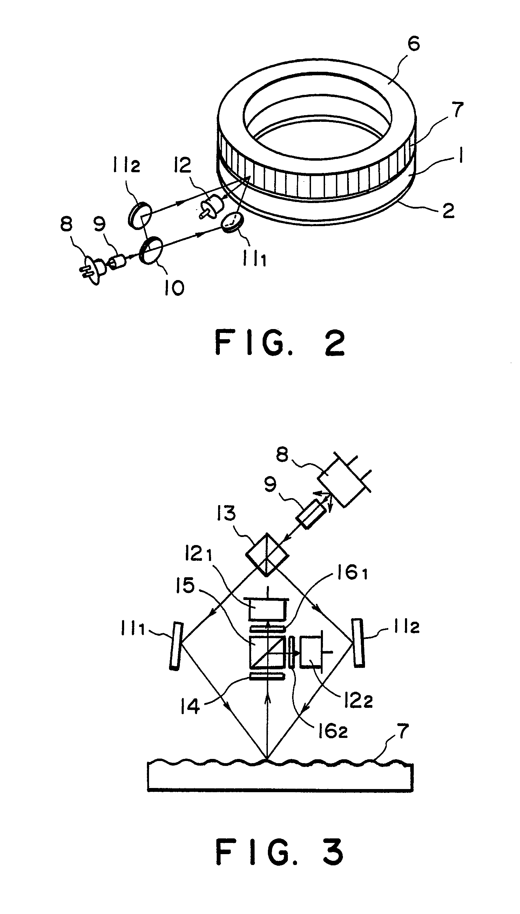

Fig. 2 shows the second embodiment of the invention. Effects similar to those in Fig. 1 are obtained by arranging the diffraction grating 7 to the side surface of the rotor 6.

Fig. 3 shows a detection optical system in the third embodiment of the invention. In Fig. 3, reference numeral 13 denotes a polarizing beam splitter; 14 indicates a quarter wavelength plate; 15 a beam splitter; and $16_1$ and $16_2$ polarizing plates whose polarization azimuths are mutually inclined by $45°$. In the diagram, the $\pm m$-order diffracted lights which were reflected and diffracted by the diffraction grating 7 become the interference light and pass through the quarter wavelength plate 14 and become the rectilinear polarized light. The rectilinear polarized light is separated into the transmitted light flux and the reflected light flux by the beam splitter 15 and the separated light fluxes enter photo sensitive devices $12_1$ and $12_2$ through the polarizing plates $16_1$ and $16_2$. Since the polarization azimuths of the polarizing plates $16_1$ and $16_2$ are mutually deviated by $45°$, sine wave signals whose phases are deviated by $90°$ are output from the photo sensitive devices $12_1$ and $12_2$ due to the deviation of the diffraction grating 7, thereby enabling the rotating direction of the rotor 6 to be also discriminated.

The above embodiments have been described with respect to the example in which the vibrating member 1 is fixed and the moving member or rotor 6 which is come into pressure contact with the vibrating member 1 is moved in accordance with the travelling vibration wave. However, it is also possible to construct in a manner such that, for instance, the vibrating member 1 (Fig. 5) is come into pressure contact with the upper surface of a disk-shaped supporting member 6A (Fig. 5) and is moved by the travelling vibration wave generated on the vibrating member 1 and a deviation of the diffraction grating 7 (Fig. 5) attached to the side surface of the vibrating member is detected by a detection optical system (Fig. 5) including photo sensitive devices as shown in Fig. 3.

The vibration member 1 in Fig. 5 cannot be rotated once.

As described above, since the rotational speed detector of the invention is of the contactless type using the interference of the lights, there are advantages such that the rotating state of the vibration wave driven motor can be detected at a high accuracy and the rotational speed or rotational angle of the vibration wave driven motor can be controlled at a high accuracy.

There is provided a vibration wave driven motor comprising: a number of diffraction gratings provided for either a rotating member or a vibrating member along a rotating direction; and an optical system for irradiating a light flux from a coherent light source to the diffraction gratings through a plurality of optical paths, for interfering a plurality of diffracted lights generated, and for allowing the resultant interference light to be detected by photo sensitive devices, wherein by detecting the outputs of the photo sensitive devices, the high accurate speed control is accomplished.

## Claims

1. A vibration wave driven motor including vibrating means to which a signal is applied to produce a travelling vibration wave which causes a relative movement between said vibrating means and a contact member in frictional contact with said vibrating means, comprising:
a diffraction grating provided on either said contact member or said vibrating means along a moving direction;
a coherent light source;
light sensitive means for generating a signal to adjust a rotational speed of said motor; and
an optical sytem for directing a light beam from said light source to said diffraction grating through a plurality of optical paths so as to generate a coherent light to be detected by said light sensitive means.

2. A motor according to Claim 1, wherein said optical system comprising:
a beam splitter for dividing the light beam from said light source;
a mirror member arranged so as to direct each of the divided light beams from said beam splitter onto the diffraction grating, the coherent light reflected by said diffraction grating being directed to said light sensitive means.

3. A motor according to Claim 1, wherein the diffraction grating is disposed on a top surface of the contact member.

4. A motor according to Claim 1, wherein the diffraction grating is disposed on a side surface of the contact member.

5. A motor according to Claim 1, wherein the diffraction grating is disposed on a side surface of the vibrating means.

6. A motor according to Claim 1, wherein the light sensitive means includes two light sensitive elements.

7. A motor according to Claim 1, wherein the optical system includes a beam splitter for splitting the coherent light from the diffraction grating to each of the light sensitive elements.

8. A vibration wave driven motor including vibrating means to which a signal is applied to produce a travelling vibration wave which causes a relative movement between said vibrating means and a contact member in frictional contact with said vibrating means, comprising:
diffraction grating means arranged on either said contact member or said vibrating means along a moving direction of either said contact member or said vibrating means;
light source means for irradiating an optical beam to be converted into a coherent beam to the diffraction grating means; and
optical detecting means for detecting the coherent beam incident thereon and for generating a control signal to adjust a rotational state of said motor.

9. A motor according to Claim 8, wherein said light source means includes a light source to emit a laser beam.

10. A motor according to Claim 8, wherein said diffraction grating means is arranged on a top surface of said contact member.

11. A motor according to Claim 8, wherein said contact member includes a rotor having a bottom surface in contact with said vibrating means.

12. A motor according to Claim 8, wherein light source means includes:
a light source for generating the optical beam;
a beam splitter for splitting the optical beam from said light source; and
a mirror member arranged so as to direct a splitted optical beam from the beam splitter to a surface of the diffraction grating means.

13. A vibration wave driven actuator including vibrating means to which a signal is applied to produce a travelling vibration wave which causes a relative movement between said vibrating means and a contact member in frictional contact with said vibrating means, comprising:
diffraction grating means arranged on either said contact member or said vibrating means along a moving direction of either said contact member or said vibrating means;
light source means for irradiating an optical beam to be converted into a coherent beam to the diffraction grating means; and

optical detecting means for detecting a reflected coherent beam incidnet thereon and for generating a control signal to adjust a rotational status of said actuator.

FIG. IA

FIG. IB

$$\Theta m = \sin^{-1} \frac{m\lambda}{P}$$

FIG. IC

FIG. 2

FIG. 3

EP 0 369 331 A2

FIG. 4A

FIG. 4B

FIG. 4C

FIG. 5